# EUROPÄISCHE PATENTSCHRIFT

(11) **EP 0 963 160 B1**
(45) Veröffentlichungstag und Bekanntmachung des Hinweises auf die Patenterteilung: **23.04.2003**
(21) Anmeldenummer: 98910645.5
(22) Anmeldetag: 11.02.1998
(51) Int. Cl.: A22C 11/00

(54) **WIEDERVERWENDBARE KARTUSCHE ZUM HERSTELLEN EINES HAUTLOSEN WÜRSTCHENS**
REUSABLE CARTRIDGE FOR PRODUCING SKINLESS SAUSAGE
CARTOUCHE REUTILISABLE POUR PRODUIRE DES SAUCISSES SANS PEAU

(30) Priorität: 11.02.1997 DE 19705152
(43) Veröffentlichungstag der Anmeldung: 15.12.1999
(73) Patentinhaber: Inotec GmbH, 72770 Reutlingen-Betzingen (DE)
(72) Erfinder: DECKERT, Siegfried, D-21391 Reppenstedt (DE)
(74) Vertreter: Weiss, Peter, Dr. rer.nat.
(86) Internationale Anmeldenummer: EP9800761
(87) Internationale Veröffentlichungsnummer: WO98034489

(56) Entgegenhaltungen:
- EP-A- 0 028 858
- WO-A-93/07760
- DE-C- 391 956
- FR-A- 1 557 553
- IT-B- 1 106 091
- US-A- 2 980 949
- US-A- 3 152 358
- US-A- 3 528 825
- US-A- 3 916 483

## Beschreibung

Die Erfindung betrifft eine wiederverwendbare Kartusche zum Herstellen eines hautlosen Würstchens, mit einem rohrförmigen Mittelteil und zumindestens einem sich anschließenden Verschlußende aus einem flexiblen Kunststoff.

Es ist bekannt, hautlose Würstchen herzustellen, indem Wurstbrät in einen endlosen Zelluosedarm eingespritzt wird, der anschließend in der Länge der späteren Würstchen entsprechenden Abständen abgedreht wird. Nach dem Reifeprozeß werden die Würstchen mit Ausnahme von Bratwürstchen, geräuchert, gekocht und abgekühlt und der Zelluosedarm anschließend abgeschält. Das Verfahren des Abschälens des Zelluosedarms wird von Hand durchgeführt, und stellt somit einen zeitaufwendigen und auch vom hygienischen Gesichtspunkt nicht unbedenklichen Verfahrensschritt dar. Zudem sind die Zelluosedärme nur einmal verwendbar, so daß bei der Herstellung der Würstchen eine große Menge an verbrauchtem Zelluosedarm anfällt, der zumeist als Sondermüll entsorgt werden muß, und einen hohen Kostenfaktor bei der Würstchenherstellung darstellt.

Durch die notwendigen mit der Hand durchgeführten Verfahrensschritte ist es nicht möglich die Würstchen vollautomatisch herzustellen.

Es hat daher in der Vergangenheit Versuche gegeben, die Herstellung hautloser Würstchen mit Hilfe von Kartuschen zu bewerkstelligen. Dabei ist für jedes spätere Würstchen eine eigene Kartusche vorgesehen, in welche die Wurstmasse eingebracht wird.

Ein Verfahren dieser Art ist z.B. in der DE-OS 25 23 506 beschrieben.

Das wesentliche Problem, das den Einsatz solcher Kartuschen zur Herstellung von Würstchen beschränkt, liegt in der aufwendigen Gestaltung und komplizierten Handhabung der Verschlußkappen. Hierbei sollen die Verschlußkappen einerseits dicht schließen, andererseits ein Ausdehnen des Wurstbrätes in der Kartusche ermöglichen.

Aus der DE-OS 41 34 249 ist bereits eine Kartusche bekannt, welche mit einer aufwendig gestalteten Verschlußhülse ausgestattet ist. Hierbei ist die Verschlußhülse unmittelbar mit einer Schließeinrichtung versehen, welche eine Durchtrittsöffnung nach dem Einfüllen dicht verschließt. Die Verschlußkappe ist während und nach dem Füllvorgang fest mit der Hülse verbunden. Wie bei dem anderen bereits bekannten Stand der Technik muß die Verschlußkappe jedoch einzeln auf die beiden Enden der Kartusche manuell aufgesetzt werden und später zum Reinigen der Form wieder entfernt werden.

Es ist daher Aufgabe der vorliegenden Erfindung, die bekannten Kartuschen so zu verbessern, daß sie vielfach wiederverwendbar sind und eine einfache kostengünstige Fertigung der Kartuschen wie auch der Würstchen ermöglichen.

Diese Aufgabe wird erfindungsgemäß dadurch gelöst, daß das Mittelteil der Kartusche einstückig mit dem Verschlußende ausgebildet ist.

Diese Ausbildung der Kartusche hat gegenüber dem Stand der Technik wesentliche Vorteile. Da das Verschlußende einstückig mit dem rohrförmigen Mittelteil der Kartusche ausgebildet ist, entfallen die im Stand der Technik bisher notwendige Verfahrensschritte des Aufsetzens der Kartusche sowie des späteren Entfernens der Kartusche. Somit wird es durch die erfindungsgemäße Kartusche erstmalig möglich, das Verfahren vollautomatisch durchzuführen, da keine zusätzlichen manuellen Schritte erforderlich sind.

Von besonderem Vorteil ist ferner, daß die Kartusche sehr einfach unter Verwendung einer einzigen Form hergestellt werden kann, so daß sich die Herstellungskosten der Kartusche wesentlich verringern.

Bei einer bevorzugten Ausführungsform der Kartusche, kann das rohrförmige Mittelteil beidseitig, stirnseitig mit einem sich anschließenden Verschlußende ausgebildet sein. Auf diese Weise wird das Einfüllen des Wurstbräts und das spätere Ausstoßens des fertigen Würstchens deutlich vereinfacht.

Um die gewünschte Form des fertigen Würstchen zu erzielen, kann man in günstiger Weise das Verschlußende im Anschlußbereich an das rohrförmige Mittelteil mit dem gleichem Durchmesser wie das Mittelteil ausbilden, wobei es sich zu dem von dem rohrförmigen Mittelteil abliegenden Ende hin verjüngt. Hierdurch wird das charakteristische halbrund ausgebildete Würstchenende direkt beim Herstellungs- und Formungsprozeß erzielt.

Bevorzugt ist, wenn der Enddurchmesser des Verschlußendes etwa zwei Dritteln des Durchmessers des Rohres entspricht.

Vorzugsweise ist das Verschlußende mit geringerer Wandstärke als das rohrförmige Mittelteil ausgebildet. Hierbei hat es sich als besonders vorteilhaft erwiesen, wenn die Wandstärke des rohrförmigen Mittelteils etwa ein dreifaches der Wandstärke des Verschlußendes beträgt. Auf diese Weise wird eine ausreichende Elastizität des Verschlußendes erzielt, die insbesondere bei dem Verschließen und beim Ausformen des fertigen Würstchens erforderlich ist.

In bevorzugter Weise kann das Verschlußende im Bereich seiner Innenwand mit hervorspringenden Rippenelementen versehen sein, welche sich im wesentlichen über die Länge des Verschlußendes erstrecken. Hierbei ist insbesondere bevorzugt, wenn sich die Rippenelemente über einen sich an das Ende des Verschlußendes und sich an den Anschlußbereich zum rohrförmigen Mittelteil anschließende Mittelbereich des Verschlußendes erstrecken. Ferner sind vorzugsweise fünf oder sechs Rippenelemente vorgesehen.

Durch die Bereitstellung von Rippenelementen ist es möglich, die Würstchen bereits an beiden mit diversen Falten zu versehen, welche den klassischen Abdreheffekt bei herkömmlich hergestellten Würstchen simulieren. Gleichzeitig unterstützen die Rippenelemente die Stabilität des Verschlußendes, ohne die notwendigen Flexibilität zu beeinflussen.

Gemäß einer weiteren bevorzugten Ausführungsform ist an dem dem rohrförmigen Mittelteil gegenüberliegenden Ende des Verschlußendes ein Einfüll- und Ausstoßelement ausgebildet.

Diese Ausbildung unterstützt weiter die vollautomatische Herstellung eines hautlosen Würstchens, da das Einfüllen, Verschließen und anschließende Ausstoßen des Würstchens ohne die früher notwendigen Zusatzschritte vorgenommen werden kann und daher das Verfahren zusätzlich vereinfacht wird.

Hierbei hat es sich als besonders vorteilhaft herausgestellt, wenn das rohrförmige Mittelteil, das Verschlußende und das Einfüll- und Ausstoßelement einstückig ausgebildet sind, wobei an jeden Verschlußende ein Einfüll- und Ausstoßelement vorgesehen sein kann. Durch das Bereitstellen einer einzigen Form die gleichzeitig das Einfüllen, das Verschließen und Ausstoßen ermöglicht, entfallen, wie bereits erwähnt, die früher notwendige zusätzliche Schritte, bei denen das Einfüllelement zunächst manuell mit der Kartusche verbunden werden mußten.

Um das Einfüllen zu erleichtern ist das Einfüll- und Ausstoßelement vorzugsweise trichterförmig ausgebildet, wobei der Enddurchmesser des Einfüll- und Ausstoßelmentes dem Doppelten des Durchmessers an der Anschlußstelle zum Anschlußende entspricht. Ein trichterförmig ausgebildetes Einfüll- und Ausstoßelement hat sich als besonders bevorzugt erwiesen, um ein möglichst kontinuierliches Einfüllen des Wurstbräts in die Kartusche zu unterstützen.

Gemäß einer bevorzugten Ausführungsform der Form ist das Einfüll- und Ausstoßelement mit einer Wandstärke ausgebildet, die ungefähr 2/3 der Wandstärke des rohrförmigen Mittelteil entspricht. Darüber hinaus kann zum Erleichtern des Einfüllens an dem von dem Abschlußende abliegenden Ende des Einfüll- und Ausstoßelementes ein sich kreisförmig um des Ende herum erstrekkender Flansch ausgebildet sein. Dieser Flansch kann gleichermaßen als Auflage- und Tragekante in einer Vorrichtung eingesetzt werden.

Gemäß einer vorzugsweisen Ausführungsform ist das rohrförmige Mittelteil mit ein Verhältnis von Durchmesser zur Länge von 1:4,6 ausgebildet. Ferner ist bevorzugt wenn das Verhältnis der Längen zwischen dem rohrförmigen Mittelteil, dem Verschlußende und dem Einfüll- und Ausstoßelement 20:1:2,4 beträgt.

Es ist bevorzugt die Kartusche aus einem lebensmittelzulässigen flexiblen Kunststoff herzustellen. Hierbei sind insbesondere PTFE oder Teflon bevorzugt.

Ferner ist es möglich die Kartusche im Bereich des rohrförmigen Mittelteils zu biegen, um so vorgebogene Würstchen herzustellen.

In der Praxis hat sich als besonders bevorzugt erwiesen, zum Verschließen des Verschlußendes der wiederverwendbaren Kartuschen der vorliegenden Erfindung eine Verschlußvorrichtung einzusetzen, umfassend wenigstens zwei konvergente, quer zur ihrer Längserstreckung aufeinanderzubewegbare Führungsbahnen, welche eine das Verschlußteil umgebende Öffnung begrenzen, deren lichter Querschnitt durch aufeinanderzubewegen der Führungsbahnen nach Art einer Verschlußblende rundum verringerbar ist.

Hierbei wird das Verschlußende lediglich in die Öffnung zwischen zwei beweglichen Führungsbahnen eingebracht, welche zum Verschließen des Verschlußendes aufeinanderzubewegt werden, wodurch der Querschnitt der Querschnitt, in welche das Verschlußende eingebracht ist, verringert wird, und auf diese Weise der Enddurchmesser des Verschlußendes noch weiter reduziert wird.

Vorzugsweise sind hierbei mehrere gleichgestaltete Führungsbahnen in Reihe angeordnet, so daß mit einer einzigen Verschlußrichtung eine Vielzahl von wiederverwendbaren Kartuschen gleichzeitig verschlossen werden können.

Als besonders bevorzugte Ausführungsform hat es sich hierbei erwiesen, wenn die Führungsbahnen im Bereich eines plattenförmigen Elementes ausgebildet sind, hierbei ist eine mögliche Variante, daß die Führungsbahnen von den Begrenzungsflächen der Öffnungen eines Lochblechs gebildet werden.

Die Ausbildung der Führungsbahnen innerhalb eines plattenförmigen Elementes ist jedoch nur eine mögliche Variante der Ausgestaltung, gleichermaßen können die Führungsbahnen von gebogenen oder anders ausgestalteten Elementen gebildet werden. Plattenförmige Elemente bieten sich jedoch als besonders einfache Variante an, da auch das Verschieben der beiden plattenförmigen Elementen zueinander einfach durchgeführt werden kann.

Gemäß einer weiteren bevorzugten Ausführungsform sind die Verschlußvorrichtungen paarweise übereinander angeordnet, vorzugsweise paarweise mit vorbestimmten Abstand übereinander angeordnet, wobei der vorbestimmte Abstand dem Abstand der zwei Verschlußenden der Kartusche voneinander entspricht.

Durch diese Ausgestaltung ist es möglich gleichzeitig beide Verschlußenden der erfindungsgemäßen Kartusche in einem Schritt zu verschließen und so den Betrieb noch einfacher zu gestalten.

Weiterhin kann vorgesehen sein, daß die Führungsbahnen tropfenförmig ausgebildet sind, wobei sich die halbkreisförmigen Elemente des Tropfens zu der das Verschlußteil umgebende Öffnung ergänzen.

Es hat sich weiterhin als vorteilhaft erwiesen, wenn die paarweise übereinander angeordneten Verschlußvorrichtungen in einer Kassette angeordnet sind.

Die Verschlußvorrichtung kann über ein pneumatisches oder elektromotorisches Vorschubsystem betrieben werden.

Im folgenden werden Ausführungsbeispiele der Erfindung anhand einer Zeichnung näher erläutert.

Es zeigen:
- Figur 1:: in einem Vertikalschnitt eine Kartusche gemäß einer ersten Ausführungsform der Erfindung,
- Figur 2:: einen Horizontalschnitt der in Figur 1 dargestellten Kartusche im Schnitt A-A,
- Figur 3:: ein Detail der in Figur 1 dargestellten Kartuschen, wobei das Verschlußende vergrößert ist,
- Figur 4:: eine Vielzahl von erfindungsgemäßen Kartuschen, welche nebeneinander in einem Transportträger in zwei Reihen montiert sind,
- Figur 5:: dem in Figur 4 dargestellten Transportträger in Draufsicht,
- Figur 6:: den in Figur 4 dargestellten Transportträger im Schnitt,
- Figur 7:: eine Verschlußvorrichtuntg zum Verschließen der erfindungsgemäßen Kartusche,
- Figur 8a und 8b:: die in Figur 7 dargestellte Verschlußvorrichtung in Aufsicht im offenen und geschlossenen Zustand,
- Figur 9:: das Befüllen der erfindungsgemäßen Kartusche gemäß einer ersten Ausführungsform und
- Figur 10:: das Befüllen einer erfindungsgemäßen Kartusche gemäß einer zweiten Ausführungsform.

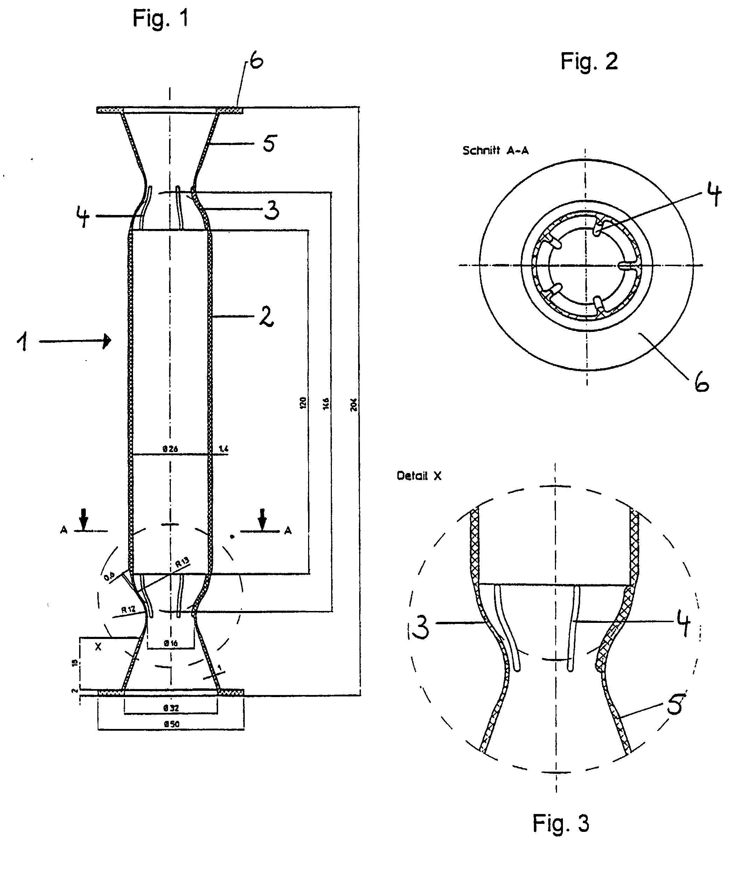

In Figur 1 ist in einem Längsschnitt eine Kartusche gemäß der vorliegenden Erfindung dargestellt. Die Kartusche 1 besteht aus einem rohrförmigen Mittelteil 2, welches beiderseitig an den Enden mit Verschlußenden 3 versehen ist, die bei dem hier beschriebenen Ausführungsbeispiel im wesentlichen identisch aufgebaut und ausgebildet sind.

Die Verschlußenden 3 sind hierbei einstückig mit dem rohrförmigen Mittelteil 2 verbunden, und verjüngen sich zu ihrem von dem rohrförmigen Mittelteil abliegenden Ende hin. Bei dem in Figur 1 dargestellten Ausführungsbeispiel verjüngt sich das Verschlußende 3 hierbei zunächst kreisbogenförmig und geht dann langsam in den Enddurchmesser über. Hierdurch wird im Betrieb das charakteristische halbrunde Ende des fertigen Würstchens erzielt.

Unmittelbar an die Verschlußenden schließen sich trichterförmig ausgestaltete Einfüll- und Ausstoßelement 5 an. Hierbei ist auch der Übergang zwischen dem Verschlußende 3 und dem Einfüllund Ausstoßelement 5 einstückig ausgebildet. Das Einfüll- und Ausstoßelement 5 verbreitet sich ausgehend von dem Verschlußende 3 und erreicht an dem vom Verschlußende 3 abliegenden Ende den maximalen Durchmesser.

An den von dem Abschlußende abliegenden Enden der Einfüll- und Ausstoßelemente 5 ist ferner ein Flansch ausgebildet, welcher das Einfüll- und Ausstoßelement kreisförmig umgibt, und sich radial nach außen erstreckt.

Wie in Figur 3 im Detail dargestellt, ist das Verschlußende 3 an seiner Innenwand mit zusätzlichen Rippenelementen 4 ausgebildet, welche nach innen vorstehen und sich längs, im wesentlichen über die gesamte Länge, des Verschlußelementes erstrekken. Hierbei erstrecken sich die Rippenelemente jedoch nur über einen Mittelbereich des Verschlußendes 3, gebildet zwischen dem Ansatzbereich zwischen dem Verschlußende 3 und dem rohrförmigen Mittelteil 2 sowie zwischen dem Verschlußende 3 und dem Einfüll- und Ausstoßelement 5. Da sich die Rippenelemente nicht auf die Ansatzbereiche erstrecken, wird die Stabilität des Verschlußendes lediglich in seinem Mittelbereich erhöht, gleichzeitig jedoch eine ausreichende Flexibilität der Ansatzbereiche, z.B. bei im Betrieb auftretenden Verformungen gewährleistet.

Die erfindungsgemäße Kartusche 1 ist, wie in Figur 1 bis 3 dargestellt, mit verschiedenen Wandstärken ausgebildet. Hierbei sind die Wände des rohrförmigen Mittelteils 2 am stärksten ausgebildet, so daß dieser Bereich im Betrieb nur eine geringfügige Nachgiebigkeit zeigt, und sich die Abmaße kaum verändern. Im Verhältnis zu der Wandstärke des rohrförmigen Mittelteils 2 sind die Verschlußenden 3 mit einer geringeren Wanddicke ausgebildet, die in etwa einem Drittel der Wanddicke des rohrförmigen Mittelteils entspricht. Die sich an die Verschlußelemente 3 anschließenden Einfüllelemente 5 sind mit einer Wandstärke ausgebildet, die in etwa 2/3 der Wandstärke des rohrförmigen Mittelteils entspricht. Ferner ist der Flansch mit einer solchen Wnadstärke und Größe ausgebildet, daß die Form im Betrieb nur von dem Flansch getragen werden kann.

Durch die unterschiedlich gewählten Wanddicken wird eine unterschiedliche Flexibilität über die Länge der Form erzielt. So ist die Flexibilität im Bereich des Verschlußendes am größten und es ist daher durch Einwirkung von außen möglich den Enddurchmessers des Verschlußendes noch weiter zu verkleinern oder beim Ausstoßen des fertigen Würstchens zu vergrößern.

Als Material für die erfindungsgemäße Kartusche wählt man in bevorzugter Weise einen lebensmittelzulässigen Kunststoff, z.B. Teflon oder PTFE.

Die in Figur 1 angegebenen Abmessungen der erfindungsgemäßen Kartusche haben sich als besonders geeignet für eine Wurst mit einem Gewicht von 80g, einem Durchmesser von 26 mm und einer Länge von 146 mm erwiesen.

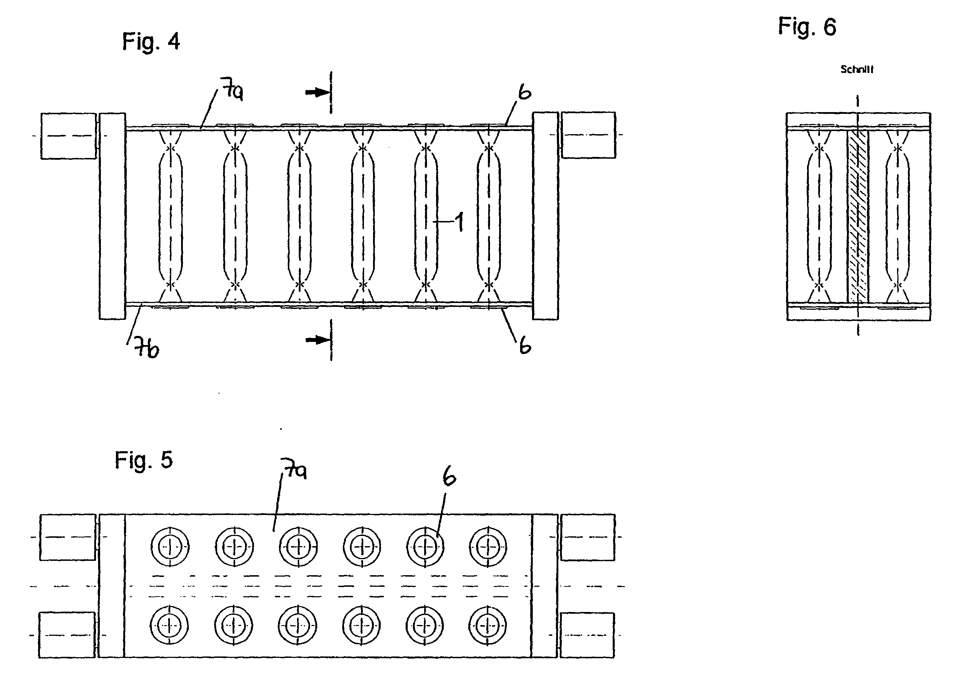

In Figur 4 ist eine Vielzahl erfindungsgemäßer Kartuschen dargestellt, die bereits in einen Transportträger eingebaut sind. Hierbei ist jede der Kartuschen zwischen zwei plattenförmigen Elementen 7a und 7b befestigt bzw. gespannt, wobei die Kartuschen in kreisförmigen Öffnungen in den plattenförmigen Elementen 7a und 7b angeordnet sind und sich jeweils an der von der Kartusche abgewandten Seite des plattenförmigen Elementes 7a, 7b mit dem im Bereich des Einfüll- und Ausstoßelementes ausgebildeten Flansch 6 abstützen. Die Transportvorrichtung bzw. der Transportträger ist in Figur 5 in Aufsicht bzw. in Figur 6 im Schnitt dargestellt. Hierbei ist es möglich den Transportträger beliebig zu erweitern, d.h. weitere Kartuschen in dem Träger anzuordnen.

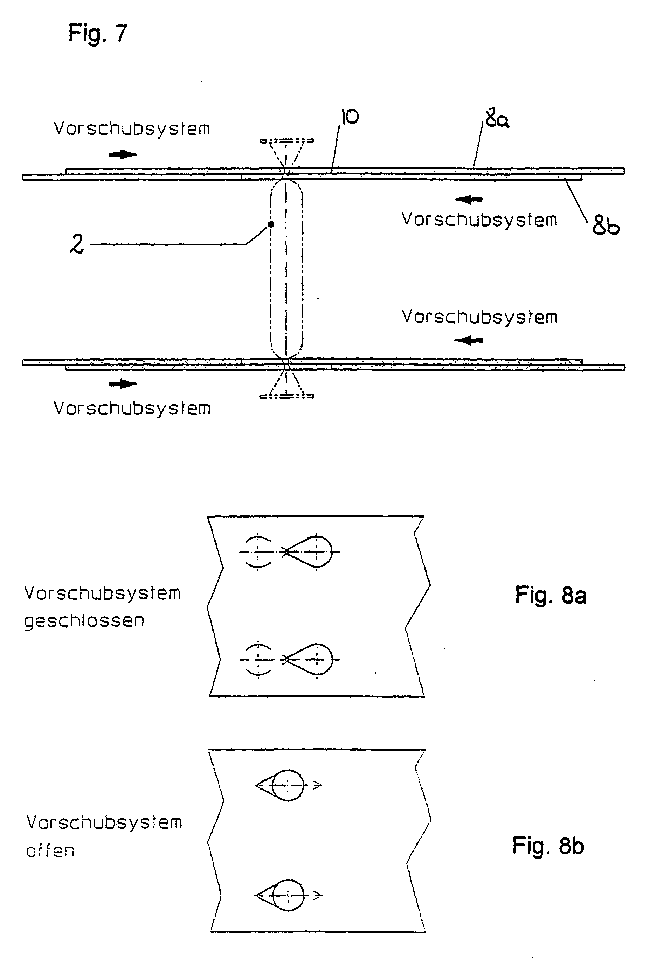

Ferner kann innerhalb des Transportträgers eine Verschlußvorrichtung angeordnet sein, die jedoch in Figur 4 nicht dargestellt ist. Eine entsprechende Verschlußvorrichtung ist in Figur 7 gezeigt. Hierbei umfaßt die Verschlußvorrichtung jeweils zwei plattenförmige Elemente 8a, 8b welche unmittelbar aufeinander angeordnet sind, und welche Führungsbahnen 10 aufweisen. Hierbei sind die Führungsbahnen 10 so zueinander angeordnet, daß sie einen Öffnung begrenzen. In diese Öffnung wird die Kartusche solchermaßen eingeführt, daß die Öffnung auf einer Ebene mit dem Ende des Verschlußendes 3 der Kartusche angeordnet ist, d.h. dem Ende mit kleineren Durchmesser.

Zum Verschließen des Verschlußendes 3 der Kartusche werden die zwei mit Führungsbahnen 10 versehenen Platten 8a, 8b aufeinanderzubewegt, wobei der lichte Querschnitt der durch die Führungsbahnen 10 eingeschlossenen Öffnung rundrum verringert wird. Auf diese Weise wird der eingeschlossene Durchmessers des Verschlußendes 3 von allen Seiten gleichmäßig verkleinert, und die Kartusche solchermaßen verschlossen, bis kein Wurstbrät mehr durch das Verschlußende durchtritt. Die Aufsicht auf eine Verschlußvorrichtung ist in den Figuren 8a und 8b dargestellt, wobei sowohl der offene, sowie auch der geschlossene Zustand ohne eingeführte Kartusche dargestellt ist. Bei der dargestellten Verschlußöffnung werden die Führungsbahnen 10 durch Begrenzungsflächen tropfenförmige Öffnungen in den Platten 8a, 8b gebildet. Die beiden Platten sind hierbei solchermaßen aufeinander angeordnet, daß die halbkreisförmigen Bereiche der tropfenförmigen Öffnungen nebeneinander zu liegen kommen, und so eine kreisförmige Öffnung bilden. Die spitzen Enden der tropfenförmigen Öffnungen liegen dabei rechts und links neben der kreisförmigen Öffnung. Werden die beiden plattenförmigen Elemente 8a, 8b aufeinanderzubewegt, d.h. gegeneinander verschoben, entfernern sich die beiden halbkreisförmigen Bereiche der tropfenförmigen Öffnungen voneinander und die spitzen Enden der tropfenförmigen Elemente werden langsam aufeinanderzugeschoben. Im geschlossenen Zustand wird die Öffnung dann nur noch von den spitzen Enden gebildet.

Im Betrieb werden, wie in Figur 7 dargestellt, sowohl das untere Verschlußende wie auch das obere Verschlußende der Kartusche 3 von einer Verschlußvorrichtung umgeben. Hierbei sind die beiden Verschlußvorrichtungen unabhängig voneinander steuerbar, d.h. es ist möglich zunächst das untere Ende zu verschließen, die Kartusche zu befüllen und anschließend das obere Ende zu verschließen. Vorzugsweise wird die Verschlußvorrichtung dirket innerhalb des Transportträgers ausgebildet.

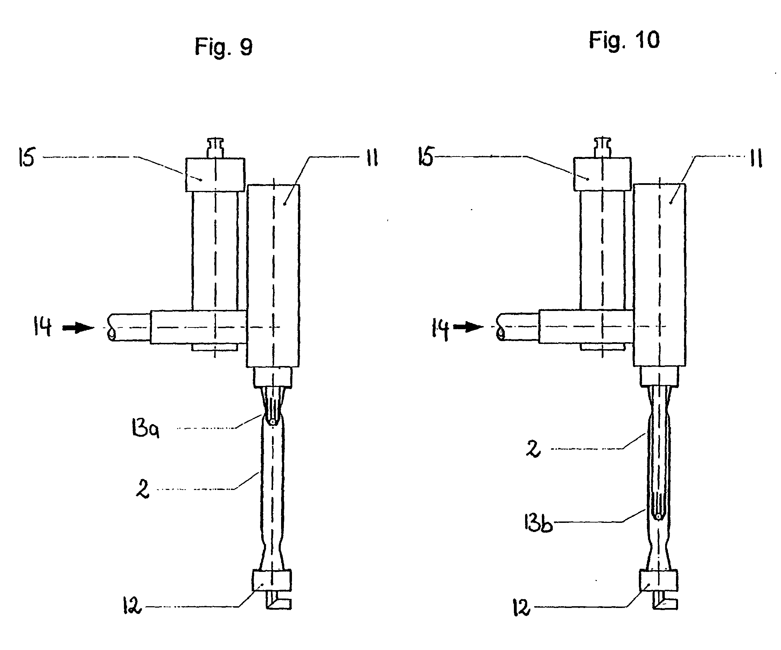

In folgenden wird anhand der Figuren 9 und 10 sowie unter Bezugnahme auf die Figuren 4 und 7 die Wirkungs- und Funktionsweise der Kartusche der Kartusche der vorliegenden Erfindung beschrieben.

Die erfindungsgemäßen Kartuschen werden in einen bereitgestellten Transportträger eingesetzt und automatisch in Befüllpositionn gefahren. Über eine pneumatische oder elektromotorische Hubstation fahren die Füllköpfe 11 auf den oberen Bereich der Kartusche 1 und gleichzeitig Vakuumsaugknöpfe 12 an den unteren Bereich der Kartusche. Die Kartuschen 1 werden über eine Vakuumpumpe evakuiert, wodurch ein Unterdruck in der Kartusche erzeugt wird, um anschließend den Eintritt des rohrförmigen Füllwerkzeuges 13 zu erleichtern. Anschließend wird das untere Verschlußende 3 geschlossen und gleichzeitig das Wurstbrät 14 über den Füllkopf 13 und eine Portioniereinrichtung 15 in das rohrförmigen Mittelteil 2 eingestoßen. Dabei ist es unerheblich, ob es sich um einen Vakuumfüllkopf 13a, wie in Figur 9 dargestellt, handelt oder wie in Figur 10 dargestellt, um einen Tauchrohrfüllkopf 13b handelt. Der Tauchrohrfüllkopf 13b wird insbesondere bei längeren und im Querschnitt größeren Würstchen eingesetzt.

Bei dem Tauchrohrfüllkopf 13b ist der Füllkopf, wie in Figur 10 dargestellt, mit einem Füllrohr versehen, welches bis auf ein Drittel der Würstchenlänge in die Kartusche 1 eintaucht und während das Füllwerkzeug das Wurstbrät in das rohrförmige Mittelteil abgibt, nach oben in Richtung des Pfeiles aus der Kartusche herausgezogen wird. Bei dieser Ausführungsform kann die Kartusche auch befüllt werden, ohne das zuvor ein Vakuum in der Kartusche erzeugt wurde.

Anschließend wird auch das obere Verschlußende geschlossen. Hierbei kann die Verschließrichtung je nach Wunsch manuell, pneumatisch oder elektrisch geschlossen werden. Die mit Würstchenbrät gefüllten Kartuschen fahren zusammen mit dem Transportträger zu dem nächsten Verfahrensschritt und gleichzeitig wird ein leerer mit Kartuschen versehener Transportträger in die Befüllstation überführt.

Der mit befüllten Kartuschen bestückte Transportträger kann anschließend weiteren Bearbeitungsstationen, z.B. Reifestation, Räucherstation und dergleichen, zugeführt werden. Sobald die Würstchen in den Kartuschen fertigt, d.h. gereift und gerötet sind, können die Würstchen auf einfache Weise aus den Kartuschen herausgenommen werden, in dem das obere und das untere Verschlußende 3 geöffnet wird. Um den Ausstoß der Würstchen aus den Kartuschen zu vereinfachen, ist es möglich, an den oberen Bereich der Kartusche ein Druckluftwerkzeug anzusetzen, um das Würstchen aus der Kartusche einfach mit Druckluft auszublasen. Hierbei wird das Ende des Verschlußendes der Kartusche durch den Durchmessers des Würstchens einfach auseinandergedrückt, und das Ausstoßens des Würstchen erleichtert.

## Patentansprüche

1. Wiederverwendbare Kartusche (1) zum Herstellen eines hautlosen Würstchens, mit einem rohrförmigen Mittelteil (2) und zumindestens einem sich anschließenden Verschlußende (3) aus einem flexiblen Kunststoff, **dadurch gekennzeichnet, daß** das Mittelteil (2) der Kartusche (1) einstückig mit dem Verschlußende (3) ausgebildet ist.

2. Wiederverwendbare Kartusche nach Anspruch 1, **dadurch gekennzeichnet, daß** das rohrförmige Mittelteil (2) beidseitig, stirnseitig, mit einem sich anschließenden Verschlußende (3) ausgebildet ist.

3. Wiederverwendbare Kartusche nach Anspruch 1 oder 2, **dadurch gekennzeichnet, daß** das Verschlußende (3) im Anschlußbereich an das rohrförmige Mittelteil mit gleichem Durchmesser wie das Mittelteil ausgebildet ist, und sich zu seinem dem rohrförmigen Mittelteil (2) abliegenden Ende hin verjüngt.

4. Wiederverwendbare Kartusche nach Anspruch 3, **dadurch gekennzeichnet, daß** das von dem rohrförmigen Mittelteil (2) abliegende Ende des Verschlußendes (3) etwa 2/3 des Durchmessers des Mittelteils entspricht.

5. Wiederverwendbare Kartusche nach mindestens einem der Ansprüche 1 bis 4, **dadurch gekennzeichnet, daß** das Verschlußende (3) eine geringere Wandstärke als das rohrförmige Mittelteil (1) aufweist.

6. Wiederverwendbare Kartusche nach Anspruch 5, **dadurch gekennzeichnet, daß** die Wandstärke des rohrförmigen Mittelteils (2) etwa dem Dreifachen der Wandstärke des Verschlußendes (3) entspricht.

7. Wiederverwendbare Kartusche nach einem der Ansprüche 1 bis 6, **dadurch gekennzeichnet, daß** das Verschlußende im Bereich seiner Innenwand mit hervorspringenden Rippenelementen (4) versehen ist, welche sich im wesentlichen über die Länge des Verschlußendes erstrecken.

8. Wiederverwendbare Kartusche nach Anspruch 7, **dadurch gekennzeichnet, daß** sich die Rippenelemente über einen Mittelbereich des Verschlußendes (3) erstrecken, welcher zwischen dem Anschlußbereich zum rohrförmigen Mittelteil (2) und dem Endbereich des Verschlußendes ausgebildet ist.

9. Wiederverwendbare Kartusche nach einem der Ansprüche 7 oder 8, **dadurch gekennzeichnet, daß** fünf oder sechs Rippenelemente vorgesehen sind.

10. Wiederverwendbare Kartusche nach einem der Ansprüche 1 bis 9, **dadurch gekennzeichnet, daß** an dem rohrförmigen Mittelteil (2) gegenüberliegenden Ende des Verschlußendes (3) ein Einfüll- und Ausstoßelement (5) ausgebildet ist.

11. wiederverwendbare Kartusche nach Anspruch 10, **dadurch gekennzeichnet, daß** das rohrförmige Mittelteil (2) das Verschlußende (3) und das Einfüll- und Ausstoßelement (5) einstückig ausgebildet ist.

12. Wiederverwendbare Kartusche nach einem der Ansprüche 10 oder 11, **dadurch gekennzeichnet, daß** an jedem Verschlußende (3) ein Einfüll- und Ausstoßelement (5) vorgesehen ist.

13. Wiederverwendbare Kartusche nach einem der Ansprüche 10 bis 12, **dadurch gekennzeichnet, daß** das Einfüll- und Auststoßelement trichterförmig ausgebildet ist.

14. Wiederverwendbare Kartusche nach einem der Ansprüche 10 bis 13, **dadurch gekennzeichnet, daß** der Durchmesser des Einfüll- und Ausstoßelementes (5) im Anschlußbereich an das Anschlußende (3) die Hälfte des vom Verschlußende abliegenden Endes beträgt.

15. Wiederverwendabre Kartusche nach einem der Ansprüche 10 bis 14, **dadurch gekennzeichnet, daß** die Wandstärke des Einfüllelementes (5) ungefähr 2/3 der Wandstärke des rohrförmigen Mittelteils (2) entspricht.

16. Wiederverwendbare Kartusche nach einem der Ansprüche 10 bis 15, **dadurch gekennzeichnet, daß** an dem von dem Abschlußende (3) abliegenden Ende des Einfüll- und Ausstoßelements ein sich kreisförmig um das Ende herum erstreckender Flansch (6) ausgebildet.

17. Wiederverwendbare Kartusche nach einem der Ansprüche 1 bis 16, **dadurch gekennzeichnet, daß** das rohrförmige Mittelteil (2) mit einem Verhältnis von Durchmesser zu Länge von 1:4, 6 ausgebildet ist.

18. Wiederverwendbare Kartusche nach einem der Ansprüche 1 bis 17, **dadurch gekennzeichnet, daß** das Verhältnis der Länge des rohrförmigen Mittelteils (2), des Verschlußendes (3) und Einfüll- und Ausstoßelementes 20:1:2,4 beträgt.

19. Wiederverwendbare Kartusche nach einem der Ansprüche 1 bis 18, **dadurch gekennzeichnet, daß** die Kartusche (1) aus einem lebensmittelzulässigen flexiblem Kunststoff hergestellt ist.

20. Wiederverwendbare Kartusche nach einem der Ansprüche 1 bis 19, **dadurch gekennzeichnet, daß** die Kartusche aus PTFE oder Teflon hergestellt ist.

21. Wiederverwendbare Kartusche nach einem der Ansprüche 1 bis 20, **dadurch gekennzeichnet, daß** die Kartusche im Bereich des rohrförmigen Mittelteils (2) gebogen ist.

22. Verschlußvorrichtung zum Verschließen des Verschlußendes von wiederverwendbaren Kartuschen (1) zum Herstellen von hautlosen Würstchen nach einem der Ansprüche 1 bis 21, umfassend wenigstens zwei konvergente, quer zu ihrer Längserstreckung aufeinanderzubewegbare Führungsbahnen (10), welche eine das Verschlußende umgebende Öffnung begrenzen, deren lichter Querschnitt durch Aufeinanderzubewegen der Führungsbahnen (10) nach Art einer Verschlußblende rundum verringerbar ist.

23. Verschlußvorrichtung nach Anspruch 22, **dadurch gekennzeichnet, daß** mehrere gleichgestaltete Führungsbahnen (10) in Reihe angeordnet sind.

24. Verschlußvorrichtung nach Anspruch 22 oder 23, **dadurch gekennzeichnet, daß** die Führungsbahnen (10) im Bereich eines plattenförmigen Elementes ausgebildet sind.

25. Verschlußvorrichtung nach einem der Ansprüche 22 bis 24, **dadurch gekennzeichnet, daß** die Führungsbahnen (10) von den Begrenzungsflächen der Öffnungen eines Lochblechs gebildet werden.

26. Verschlußvorrichtung nach einem der Ansprüche 22 bis 25, **dadurch gekennzeichnet, daß** die Verschlußvorrichtungen paarweise übereinander angeordnet sind.

27. Verschlußvorrichtung nach einem der Ansprüche 22 bis 26, **dadurch gekennzeichnet, daß** die Verschlußvorrichtungen paarweise mit vorbestimmtem Abstand übereinander angeordnet sind, wobei der vorbestimmte Abstand dem Abstand der zwei verschlußenden (3) der wiederverwendbaren Kartusche (1) entspricht.

28. Verschlußvorrichtung nach einem der Ansprüche 22 bis 27, **dadurch gekennzeichnet, daß** die Führungsbahnen (10) tropfenförmig ausgebildet sind, wobei sich die halbkreisförmigen Bereiche der Tropfen zu der eingeschlossenen Öffnung ergänzen.

29. Verschlußvorrichtung nach einem der Ansprüche 26 oder 27, **dadurch gekennzeichnet, daß** die paarweise übereinander angeordneten Verschlußvorrichtung in einer Kassette angeordnet sind.

30. Verschlußvorrichtung nach einem der Ansprüche 22 bis 29, **dadurch gekennzeichnet, daß** die Verschlußvorrichtung ein pneumatisches oder elektromotorisches Vorschubsystem umfaßt.

## Claims

1. Re-usable cartridge (1) for producing a small skinless sausage, said cartridge having a tubular central part (2) and at least one communicating closure end (3) formed from a flexible plastics material, **characterised in that** the central part (2) of the cartridge (1) is formed integrally with the closure end (3).

2. Re-usable cartridge according to claim 1, **characterised in that** the tubular central part (2) is provided with a communicating closure end (3) at each end, on the end face.

3. Re-usable cartridge according to claim 1 or 2, **characterised in that**, in the region communicating with the tubular central part, the closure end (3) is provided with the same diameter as the central part, and it tapers towards its end remote from the tubular central part (2).

4. Re-usable cartridge according to claim 3, **characterised in that** the end of the closure end (3) remote from the tubular central part (2) corresponds to substantially 2/3 of the diameter of the central part.

5. Re-usable cartridge according to at least one of claims 1 to 4, **characterised in that** the closure end (3) has a smaller wall thickness than the tubular central part (1).

6. Re-usable cartridge according to claim 5, **characterised in that** the ' wall thickness of the tubular central part (2) corresponds to substantially three times the wall strength of the closure end (3).

7. Re-usable cartridge according to one of claims 1 to 6, **characterised in that**, in the region of its internal wall, the closure end is provided with protruding rib members (4), which extend substantially over the length of the closure end.

8. Re-usable cartridge according to claim 7, **characterised in that** the rib members extend over a central region of the closure end (3), which is provided between the region communicating with the tubular central part (2) and the end region of the closure end.

9. Re-usable cartridge according to one of claims 7 or 8, **characterised in that** five or six rib members are provided.

10. Re-usable cartridge according to one of claims 1 to 9, **characterised in that** a feed and discharge member (5) is provided at the end of the closure end (3) situated opposite the tubular central part (2).

11. Re-usable cartridge according to claim 10, **characterised in that** the tubular central part (2), the closure end (3) and the feed and discharge member (5) are formed in one piece.

12. Re-usable cartridge according to one of claims 10 or 11, **characterised in that** a feed and discharge member (5) is provided at each closure end (3).

13. Re-usable cartridge according to one of claims 10 to 12, **characterised in that** the feed and discharge member has a funnel-shaped configuration.

14. Re-usable cartridge according to one of claims 10 to 13, **characterised in that** the diameter of the feed and discharge member (5) in the region communicating with the connecting end (3) amounts to half of the end remote from the closure end.

15. Re-usable cartridge according to one of claims 10 to 14, **characterised in that** the wall thickness of the feed member (5) corresponds to approximately 2/3 of the wall thickness of the tubular central part (2).

16. Re-usable cartridge according to one of claims 10 to 15, **characterised in that**, at the end of the feed and discharge member remote from the connecting end (3), a flange (6) is provided which extends in a circular manner around the end.

17. Re-usable cartridge according to one of claims 1 to 16, **characterised in that** the tubular central part (2) has a diameter : length ratio of 1 :4.6.

18. Re-usable cartridge according to one of claims 1 to 17, **characterised in that** the ratio between the length of the tubular central part (2), the length of the closure end (3) and the length of the feed and discharge member is to 20 : 1 : 2.4.

19. Re-usable cartridge according to one of claims 1 to 18, **characterised in that** the cartridge (1) is produced from a foodstuff-compatible flexible plastics material.

20. Re-usable cartridge according to one of claims 1 to 19, **characterised in that** the cartridge is produced from PTFE or Teflon.

21. Re-usable cartridge according to one of claims 1 to 20, **characterised in that** the cartridge is curved in the region of the tubular central part (2).

22. Closure apparatus for closing the closure end of re-usable cartridges (1) for producing small skinless sausages according to one of claims 1 to 21, said apparatus including at least two convergent guide paths (10), which are displaceable towards each other transversely relative to their longitudinal extension and define an opening surrounding the closure end, the inside cross-section of which opening is reducible all around through the displacement of the guide paths (10) towards each other in the manner of a shutter.

23. Closure apparatus according to claim 22, **characterised in that** a plurality of identically shaped guide paths (10) are disposed in series.

24. Closure apparatus according to claim 22 or 23, **characterised in that** the guide paths (10) are provided in the region of a plate-shaped member.

25. Closure apparatus according to one of claims 22 to 24, **characterised in that** the guide paths (10) are formed by the boundary faces of the openings of a perforated sheet.

26. Closure apparatus according to one of claims 22 to 25, **characterised in that** the closure apparatuses are disposed in pairs one above the other.

27. Closure apparatus according to one of claims 22 to 26, **characterised in that** the closure apparatuses are disposed in pairs one above the other with a predetermined spacing therebetween, the predetermined spacing corresponding to the spacing between the two closure ends (3) of the re-usable cartridge (1).

28. Closure apparatus according to one of claims 22 to 27, **characterised in that** the guide paths (10) have a droplet-like configuration, the semicircular regions of the droplets being added to form the enclosed opening.

29. Closure apparatus according to one of claims 26 or 27, **characterised in that** the closure apparatuses, which are disposed in pairs one above the other, are disposed in a cassette.

30. Closure apparatus according to one of claims 22 to 29, **characterised in that** the closure apparatus includes a pneumatic or electric-motor advancing system.

## Revendications

1. Cartouche réutilisable (1) pour produire une saucisse sans peau, avec une partie centrale tubulaire (2) et au moins une extrémité d'obturation (3) en matière plastique souple contiguë à cette dernière, **caractérisée par le fait que** la partie centrale tubulaire (2) de la cartouche (1) est réalisée d'une seule pièce avec l'extrémité d'obturation (3).

2. Cartouche réutilisable selon la revendication 1, **caractérisée par le fait que** la partie centrale tubulaire (2) est réalisée de part et d'autre, du côté frontal, avec une extrémité d'obturation (3) contiguë.

3. Cartouche réutilisable selon la revendication 1 ou 2, **caractérisée par le fait que** l'extrémité d'obturation (3) est réalisée, dans la zone de raccordement à la partie centrale tubulaire, avec le même diamètre que la partie centrale et s'effile en direction de son extrémité éloignée de la partie centrale tubulaire (2).

4. Cartouche réutilisable selon la revendication 3, **caractérisée par le fait que** l'extrémité, éloignée de la partie centrale tubulaire (2), de l'extrémité d'obturation (3) correspond à environ 2/3 du diamètre de la partie centrale.

5. Cartouche réutilisable selon au moins l'une des revendications 1 à 4, **caractérisée par le fait que** l'extrémité d'obturation (3) présente une épaisseur de paroi plus faible que la partie centrale tubulaire (1).

6. Cartouche réutilisable selon la revendication 5, **caractérisée par le fait que** l'épaisseur de paroi de la partie centrale tubulaire (2) correspond à environ trois fois l'épaisseur de paroi de l'extrémité d'obturation (3).

7. Cartouche réutilisable selon l'une des revendications 1 à 6, **caractérisée par le fait que** l'extrémité d'obturation est pourvue, à l'endroit de sa paroi intérieure, d'éléments de nervure (4) faisant saillie et qui s'étendent sensiblement sur la longueur de l'extrémité d'obturation.

8. Cartouche réutilisable selon la revendication 7, **caractérisée par le fait que** les éléments de nervure s'étendent sur une zone centrale de l'extrémité d'obturation (3) qui est réalisée entre la zone de raccordement à la partie centrale tubulaire (2) et la zone d'extrémité de l'extrémité d'obturation (3).

9. Cartouche réutilisable selon l'une des revendications 7 ou 8, **caractérisée par le fait qu'**il est prévu cinq ou six éléments de nervure.

10. Cartouche réutilisable selon l'une des revendications 1 à 9, **caractérisée par le fait qu'**à l'extrémité, opposée à la partie centrale tubulaire (2), de l'extrémité d'obturation (3) est réalisé un élément de remplissage et d'expulsion (5).

11. Cartouche réutilisable selon la revendication 10, **caractérisée par le fait que** la partie centrale tubulaire (2) de l'extrémité d'obturation (3) et l'élément de remplissage et d'expulsion (5) sont réalisés d'une seule pièce.

12. Cartouche réutilisable selon l'une des revendications 10 ou 11, **caractérisée par le fait qu'**à chaque extrémité d'obturation (3) est prévu un élément de remplissage et d'expulsion (5).

13. Cartouche réutilisable selon l'une des revendications 10 à 12, **caractérisée par le fait que** l'élément de remplissage et d'expulsion (4) est réalisé en forme d'entonnoir.

14. Cartouche réutilisable selon l'une des revendications 10 à 13, **caractérisée par le fait que** le diamètre de l'élément de remplissage et d'expulsion (5) est, dans la zone de raccordement à l'extrémité d'obturation (3), la moitié de celui de l'extrémité éloignée de l'extrémité d'obturation.

15. Cartouche réutilisable selon l'une des revendications 10 à 14, **caractérisée par le fait que** l'épaisseur de paroi de l'élément de remplissage (5) correspond à environ 2/3 de l'épaisseur de paroi de la partie centrale tubulaire (2).

16. Cartouche réutilisable selon l'une des revendications 10 à 15, **caractérisée par le fait qu'**à l'extrémité, éloignée de l'extrémité d'obturation (3), de l'élément de remplissage et d'expulsion est réalisée une bride (6) s'étendant en forme de cercle tout autour de l'extrémité.

17. Cartouche réutilisable selon l'une des revendications 1 à 16, **caractérisée par le fait que** la partie centrale tubulaire (2) est réalisée avec un rapport entre le diamètre et la longueur de 1 : 4,6.

18. Cartouche réutilisable selon l'une des revendications 1 à 17, **caractérisée par le fait que** le rapport de longueur entre la partie centrale tubulaire (2), l'extrémité d'obturation (3) et l'élément de remplissage et d'expulsion est de 20 : 1 : 2,4.

19. Cartouche réutilisable selon l'une des revendications 1 à 18, **caractérisée par le fait que** la cartouche (1) est réalisée en matière plastique souple admise pour les produits alimentaires.

20. Cartouche réutilisable selon l'une des revendications 1 à 19, **caractérisée par le fait que** la cartouche est réalisée en PTFE ou en téflon.

21. Cartouche réutilisable selon l'une des revendications 1 à 20, **caractérisée par le fait que** la cartouche est courbée à l'endroit de la partie centrale tubulaire (2).

22. Dispositif d'obturation destiné à obturer l'extrémité d'obturation de cartouches réutilisables (1) pour produire des saucisses sans peau selon l'une des revendications 1 à 21, comportant au moins deux chemins de guidage (10) convergents, pouvant être déplacés l'un vers l'autre transversalement à leur extension longitudinale, délimitant une ouverture entourant l'élément d'obturation dont la section nominale peut être réduite tout autour à la manière d'un obturateur, en déplaçant les chemins de guidage (10) l'un vers l'autre.

23. Dispositif d'obturation selon la revendication 22, **caractérisé par le fait que** plusieurs chemins de guidage (10) de réalisation identique sont disposés en série.

24. Dispositif d'obturation selon la revendication 22 ou 23, **caractérisé par le fait que** les chemins de guidage (10) sont réalisés à l'endroit d'un élément en forme de plaque.

25. Dispositif d'obturation selon l'une des revendications 22 à 24, **caractérisé par le fait que** les chemins de guidage (10) sont formés par les faces de délimitation des ouvertures d'une tôle perforée.

26. Dispositif d'obturation selon l'une des revendications 22 à 25, **caractérisé par le fait que** les dispositifs d'obturation sont disposés, par paire, l'une face à l'autre.

27. Dispositif d'obturation selon l'une des revendications 22 à 26, **caractérisé par le fait que** les dispositifs d'obturation sont disposés, par paire, à une distance prédéterminée l'un au-dessus de l'autre, la distance prédéterminée correspondant à la distance entre les deux extrémités d'obturation (3) de la cartouche réutilisable (1).

28. Dispositif d'obturation selon l'une des revendications 22 à 27, **caractérisé par le fait que** les chemins de guidage (10) sont réalisés en forme de gouttes, les zones semi-circulaires des gouttes se complétant pour former l'ouverture enclose.

29. Dispositif d'obturation selon l'une des revendications 6 ou 27, **caractérisé par le fait que** les dispositifs d'obturation disposés, par paire, l'un au-dessus de l'autre sont disposés dans une cassette.

30. Dispositif d'obturation selon l'une des revendications 22 à 29, **caractérisé par le fait que** le dispositif d'obturation comporte un système d'avance pneumatique ou à moteur électrique.
